# Europäisches Patentamt

# European Patent Office

# Office européen des brevets

(19)

(11) Numéro de publication: **0 187 080**
**B1**

(12) ## FASCICULE DE BREVET EUROPÉEN

(45) Date de publication du fascicule du brevet:
25.01.89

(51) Int. Cl.⁴: **F 16 F 15/30,** F 16 C 15/00

(21) Numéro de dépôt: **85402409.8**

(22) Date de dépôt: **04.12.85**

(54) **Roue de stockage d'énergie.**

(30) Priorité: **07.12.84 FR 8418725**

(43) Date de publication de la demande:
**09.07.86 Bulletin 86/28**

(45) Mention de la délivrance du brevet:
**25.01.89 Bulletin 89/4**

(84) Etats contractants désignés:
**CH DE GB IT LI SE**

(56) Documents cité:
**DE-A-2 622 295**
**DE-A-2 949 125**
**DE-A-3 024 636**
**FR-A-2 242 607**
**FR-A-2 282 737**
**US-A-4 359 912**

**PATENT ABSTRACTS OF JAPAN, vol. 6, no. 65 (M-124) 943 , 24 avril 1982**
**PATENT ABSTRACTS OF JAPAN, vol. 4, no. 64 (M-11) 546 , 14 mai 1980**
**SCIENTIFIC AMERICAN, vol. 229. no. 6, décembre 1973, pages 17-23, New York, US, R.F. POST et al.: "Flywheels"**

(73) Titulaire: **AGENCE SPATIALE EUROPEENNE, 8-10, rue Mario Nikis, F-75738 Paris Cedex 15 (FR)**

(72) Inventeur: **Stravrinidis, Constantine, Lijtweg 507, Oegstgeest (NL)**

(74) Mandataire: **Orès, Bernard, Cabinet ORES 6, Avenue de Messine, F-75008 Paris (FR)**

**EP 0 187 080 B1**

## Description

La présente invention est relative à une roue de stockage d'énergie, ou volant d'inertie, hybride, à savoir comportant des portions réalisées notamment en matériau composite et des portions en matériau non-composite.

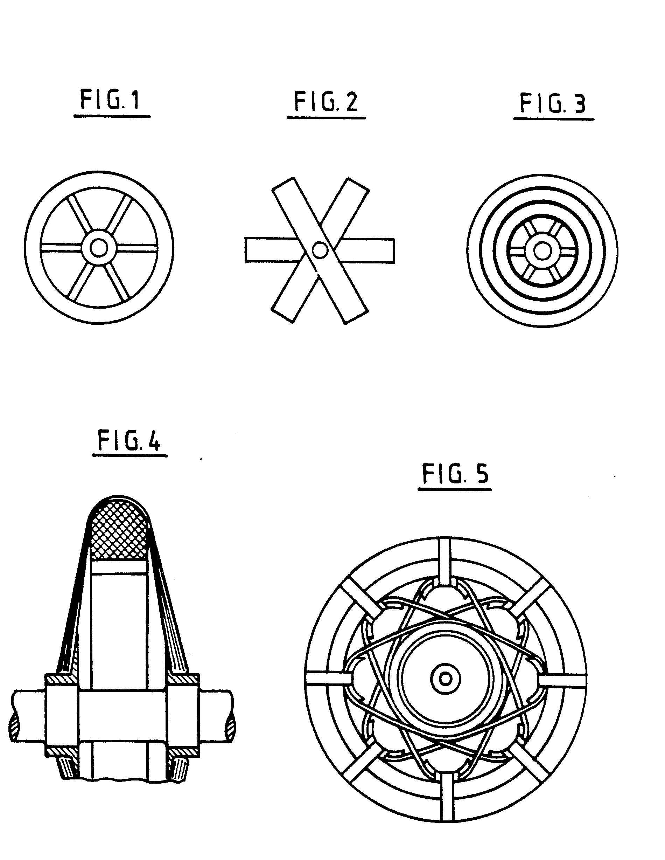

Le volant d'inertie classique complètement métallique, constitué par un anneau (ou un cercle ou une jante) relié à un moyeu par des rayons (cf. la figure 1 annexée à la présente description), sort du cadre de la présente invention parce qu'il présente une géométrie qui n'est pas adaptée à l'emploi (préféré, encore que non limitatif) de matériaux en fibres composites, les volants en matériaux composites étant réalisés à partir de fibres enroulées suivant un sens circulaire (et imprégnées de matériaux à base de résine époxy).

Le remplacement des volants métalliques par ceux qui utilisent les matériaux composites a apporté les avantages suivants:
- la possibilité de stocker une plus grande quantité d'énergie par unité de masse du volant, en raison de la plus grande résistance aux efforts de tension des fibres, et
- une amélioration du comportement à l'éclatement lorsqu'on dépasse accidentellement la valeur que la tension a au point de rupture (ou de déchirement) des fibres en fait, si les fibres sont sollicitées au-delà de leur tension de déchirement, au lieu de se réduire en gros morceaux (comme font les métaux), elles se réduisent en petits fragments (plus exactement en poudre), ce qui est particulièrement important dans le cas des applications spatiales.

En ce qui concerne les volants d'inertie en matériaux composites de l'Art antérieur, on connaît une réalisation originale sans jante (rimless), en forme d'étoile, (cf. SCIENTIFIC AMERICAN vol. 229, n° 6, Décembre 1973, pages 17 à 23 ainsi que la figure 2 annexée à la présente description), qui comporte donc uniquement une pluralité de rayons, chaque rayon étant réalisé en matériau composite avec la direction des fibres parallèles à la longueur de chaque rayon, en sorte que les forces centrifuges induisent uniquement des tensions radiales dans les fibres, donc suivant la longueur de ces dernières, qui sont ainsi utilisées dans les meilleures conditions.

Bien que cette solution évite le problème de la délamination, à savoir du déplacement transversal des fibres dû aux forces agissant perpendiculairement à la direction longitudinale des fibres et aux forces de cisaillement entre fibres, elle présente toutefois des inconvénients:
- d'abord, le volume contenant du matériau utile est relativement faible parce que les rayons occupent seulement une fraction du volume balayé par leurs extrémités libres, en sorte que pour stocker une quantité d'énergie déterminée il faut augmenter le volume utile, ce qui fait augmenter aussi le coût et limite le champ d'application,
- ensuite, les rayons sont sollicités de façon non uniforme suivant leur longueur (les portions les plus sollicitées sont celles qui sont les plus proches du moyeu, dans lequel sont générés des moments élevés lorsque le volant est mis en rotation), ce qui empêche d'utiliser au maximum de leur performance les fibres susdites, et
- enfin, la nécessité de fixer les rayons au moyeu par perçage des extrémités de ces rayons crée des problèmes graves parce qu'on réduit ainsi la section précisément là où les efforts sont plus intenses.

Une autre réalisation connue (cf. encore le document SCIENTIFIC AMERICAN susdit ainsi que la figure 3 annexée à la présente description) est constituée par un volant comportant une pluralité d'anneaux concentriques en matériau composite séparés l'un par rapport à l'autre d'un jeu.

Les anneaux concentriques présentent une densité qui augmente vers le centre de manière à améliorer la distribution des efforts et chaque jeu de séparation est rempli par des bandes de liaison en élastomère permettant l'expansion relative des différents anneaux.

Toutefois, cette deuxième solution demande l'emploi de filaments constitués par des fibres épaisses, ce qui présente des difficultés en termes de procédés de fabrications de ces fibres, notamment lors du traitement de séchage. En outre, la structure est susceptible d'induire des effets de délamination dans le corps des anneaux.

Des réalisations plus récentes de volants en matériaux composites visent à optimiser dans toutes les fibres les efforts induits par les forces centrifuges, dans ce sens que la configuration géométrique de ces volants est telle que la plupart des fibres est sollicitée radialement jusqu'à un niveau très élevé, de manière à utiliser ces matériaux de haute résistance mécanique au mieux de leurs possibilités et dans les meilleures conditions (à savoir, de manière que les efforts induits par les forces centrifuges soient dirigés suivant la longueur des fibres).

Un volant en matériaux composites répondant au critère que l'on vient d'énoncer comporte (cf. FLYWHEEL TECHNOLOGY SYMPOSIUM, Octobre 1980, pages 4 à 12 ainsi que la figure 4 annexée à la présente description) un anneau externe, qui est constitué de couches de fibres de carbone noyées dans une matrice de résine époxy et enroulées suivant la circonférence de l'anneau, et un anneau interne constitué d'enroulements de fibres d'acier de très haute résistance mécanique, qui sont également noyées dans une matrice de résine époxy: les deux anneaux sont solidarisés l'un à l'autre à l'aide d'un liant approprié.

Ce double anneau est relié au moyeu, à l'aide d'un voile de fibres de carbone/résine époxy, qui enveloppe l'anneau externe et qui joue le rôle de "rayons" de liaison.

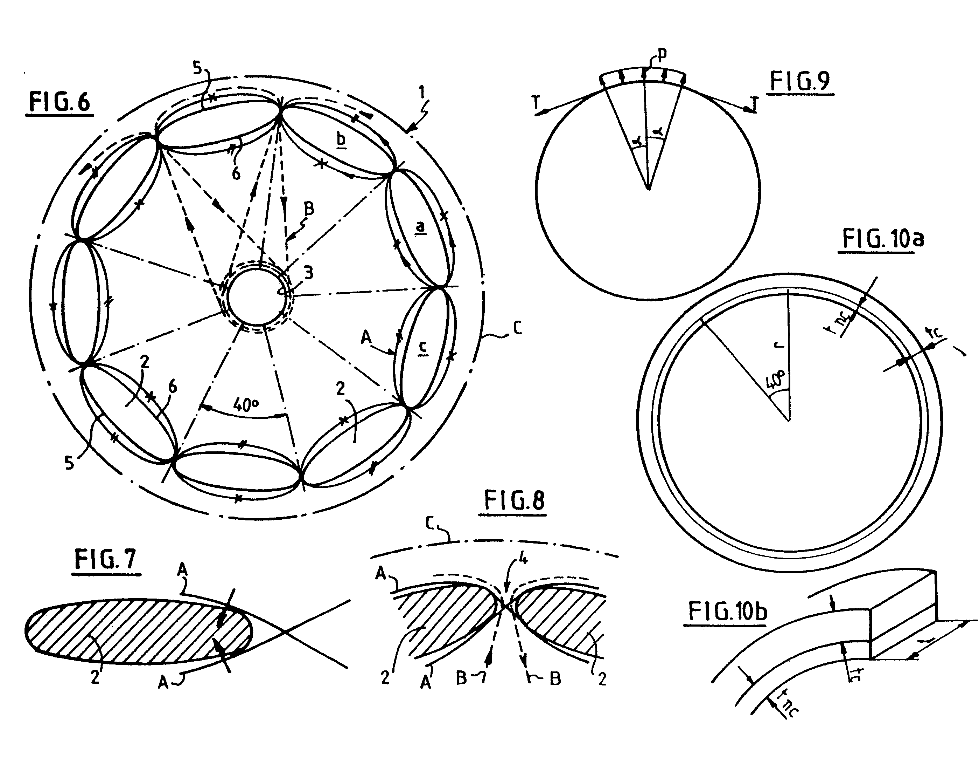

Un autre volant répondant au critère susdit comporte lui aussi (cf. encore FLYWHEEL TECHNOLOGY SYMPOSIUM, Octobre 1980, pages 168 à 173 ainsi que la figure 5 annexée à la présente description) un double anneau réalisé à l'aide de fibres "KEVLAR" dans sa portion extérieure où la vitesse tangentielle est la plus

2

EP 0 187 080 B1

élevée, et de fibres de verre "S", donc à densité plus élevée, dans la portion intérieure.

Ce double anneau est relié au moyeu du volant à l'aide d'une pluralité de boucles qui sont disposées entre la partie interne du double anneau et le moyeu et qui jouent l'office de "rayons" de liaison dont le profil de leur portion libre est celui d'une caténaire polaire, à savoir le profil d'une corde flexible soumise à l'action d'un champ de forces centrifuges (leur mise en forme étant obtenue à l'aide d'un mandrin approprié), de manière a éliminer toute flexion dans les "rayons" de liaison et à n'induire dans ces derniers que des efforts de tension uniquement. Or, le niveau de ces efforts de tension est maintenu à une valeur qui est proportionnelle à la tension dans ledit double anneau, ce qui est obtenu à l'aide d'une pluralité de poids qui permettent l'expansion radiale du système de boucles de liaison pour s'adapter à l'expansion du double anneau sous l'effet de la force centrifuge.

Ces boucles sont réalisées en un matériau composite ayant une faible densité et un module d'élasticité également faible dont la valeur est telle que l'effort de tension dans les boucles reste inférieur à celui dans l'anneau.

Dans les deux dernières réalisations qu'on vient de décrire, les différences en densité et module d'élasticité des matériaux utilisés pour construire lesdits anneaux interne et externe sont telles que, sous l'effet de la force centrifuge, l'anneau interne se dilaterait plus que l'anneau externe si leur dilatation pouvait avoir lieu librement, en sorte que, à cause du contact mutuel existant entre ces anneaux, l'anneau externe comprime l'anneau interne limitant les efforts qui sont induits dans ce dernier (ce même critère est appliqué, dans la deuxième de ces deux dernières solutions, pour la réalisation du moyeu qui comporte une portion interne en aluminium renforcé par une enveloppe en matériau composite "KEVLAR"/résine époxy).

Or, dans chacune de ces deux dernières solutions, les "rayons" supportent une portion considérable de la charge constituée par le (double) anneau quand le volant est en fonctionnement, en sorte que la valeur maximum de l'énergie que l'on peut stocker est limitée par la conception desdits "rayons".

En outre, la stabilité des volants varie pendant les accélérations et les ralentissements, ce qui constitue un désavantage notamment dans les applications spatiales.

On connaît aussi le Brevet JP-A-57 006 141 (TOSHIO) qui décrit un volant d'inertie comprenant une pluralité de segments périphériques massifs se suivant dans le sens de la circonférence de la roue.

Ces segments sont solidarisés l'un par rapport au suivant et dans l'ensemble à l'aide d'un premier, d'un deuxième et d'un troisième enroulement continu en matériaux composites.

Le premier et le deuxième en roulements s'appliquent sur la face externe uniquement des segments périphériques ainsi que sur le moyeu de la roue, tangentiellement à celui-ci, en passant d'un segment au suivant.

Ces deux enroulements diffèrent en ce que leurs portions radiales se croisent dans le premier enroulement en allant d'un segment au moyeu, alors qu'elles ne se croisent pas dans le deuxième enroulement, bien que, dans chaque cas, des croisements multiples ont lieu entre les différentes portions radiales en allant d'un segment à l'autre en passant par le moyeu.

Le troisième enroulement s'applique uniquement sur la face externe des segments périphériques en parcourant d'un bout à l'autre la circonférence de la roue, et ce après avoir disposé le premier et le deuxième enroulements.

Ces enroulements ont pour rôle d'empêcher que les segments périphériques se déplacent sous l'action de la force centrifuge, en sorte que leurs portions radiales supportent des efforts relativement élevés.

Les segments de la roue TOSHIO, bien que disposés suivant la circonférence de la roue, sont maintenus écartés par un couvercle de positionnement, (dont la présence ne permet pas de solliciter les filaments des enroulements au maximum de leurs performances) et présentent une épaisseur radiale qui est beaucoup plus importante que l'épaisseur radiale des enroulements.

La présente invention s'est en conséquence donné pour but de pourvoir à un volant d'inertie (ou à une roue de stockage d'énergie) qui répond mieux aux nécessités de la pratique que les volants antérieurement connus, notamment en ce que:

- l'énergie maximum qu'on peut stocker par unité de masse du volant selon l'invention (à savoir l'énergie spécifique du volant) est sensiblement indépendante de la conception des "rayons" de la roue, c'est-à-dire qu'elle n'est pas limitée par la résistance intrinsèque du matériau dont se composent ces "rayons",

- le problème de la délamination est sensiblement réduit et, de toutes façons, on élimine les effets dus à une éventuelle délamination, et

- on peut stocker dans une roue de diamètre donné, une quantité d'énergie supérieure.

La présente invention a pour objet une roue de stockage d'énergie comprenant une pluralité de segments périphériques massifs se suivant dans le sens de la circonférence de la roue et réalisés en un matériau ayant une densité élevée et un faible coefficient de dilation thermique,

- lesdits segments étant solidarisés entre eux et au moyeu de la roue à l'aide d'un premier, d'un deuxième et d'un troisième enroulement continu constitués chacun de filaments en matériaux composites, dont la densité est inférieure à celle du matériau dans lequel sont réalisés les segments de roue,

- ledit deuxième enroulement étant constitué par un enroulement continu dont le filament s'applique sur la face externe uniquement desdits segments périphériques ainsi que sur le moyeu de la roue, tangentiellement à celui-ci, en passant d'un segment au suivant,

- ledit troisième enroulement étant constitué par un enroulement continu dont le filament est disposé sur la face externe desdits segments périphériques en parcourant d'un bout à l'autre la circonférence de la roue, et

3

EP 0 187 080 B1

ce après avoir disposé lesdits premier et deuxième enroulements,
laquelle roue de stockage d'énergie est caractérisée en ce que:
- lesdits segments périphériques sont juxtaposés l'un à côté de l'autre, et
- ledit premier enroulement solidarise les différents segments l'un par rapport au suivant et est constitué par un enroulement continu dont le filament s'applique, à chaque tour effectué dans le sens de la circonférence, alternativement sur la totalité du profil de la face externe d'un segment et sur la totalité du profil de la face interne du segment contigu qui le suit dans le sens de l'enroulement, la solidarisation du premier segment par rapport au deuxième ayant lieu au début du deuxième tour, tandis que la solidarisation du dernier segment par rapport au premier a lieu à la fin du deuxième tour.

Selon un mode de réalisation préféré de la roue de stockage d'énergie conforme à l'invention, l'épaisseur radiale desdits segments est du même ordre de grandeur ou inférieure par rapport à l'épaisseur radiale desdits enroulements.

Selon un autre mode de réalisation préféré de la roue de stockage d'énergie conforme à l'invention, l'épaisseur radiale dudit troisième enroulement est relativement importante par rapport à l'épaisseur radiale desdits premier et deuxième enroulements.

Selon encore un autre mode de réalisation préféré de la roue de stockage d'énergie conforme à l'invention, ledit deuxième enroulement comporte un nombre de spires (ou de tours) moindre par rapport au nombre de spires des autres enroulements.

Selon un mode de réalisation préféré de la roue de stockage d'énergie conforme à l'invention, chaque segment présente une section dont le profil est convexe.

Selon une disposition avantageuse de ce mode de réalisation, chaque segment est cylindrique à section ovale.

Selon une modalité avantageuse de cette disposition, chaque segment est disposé avec le petit axe de la section ovale dirigé radialement.

Selon un autre mode de réalisation préféré de la roue de stockage d'énergie conforme à l'invention, les segments juxtaposés sont en nombre impair, et de préférence égal à neuf.

Selon un mode de réalisation préféré de la roue de stockage d'énergie conforme à l'invention, les filaments constituant les différents enroulements sont en fibres decarone, dont l'ordre de grandeur de l'épaisseur est le millimètre.

Selon une variante avantageuse de ce mode de réalisation, les filaments constituant les différents enroulements sont en un matériau non-composite, notamment en acier inoxydable ou autre.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels:

- les figures 1 à 5 représentent cinq configurations de volants proposées dans l'Art antérieur,
- la figure 6 illustre schématiquement le volant conforme à la présente invention,
- les figures 7 et 8 montrent des détails se rapportant à la figure 6,
- les figures 9, 10a et 10b se réfèrent à l'étude de faisalité qui accompagne la description du volant selon l'invention.

Il doit être bien entendu, toutefois, que ces dessins et les parties descriptives correspondantes, sont donnés uniquement à titre d'illustration de l'objet de l'invention, dont ils ne constituent en aucune manière une limitation.

Les volants proposés dans l'Art antérieur - qui sont illustrés aux figures 1 à 5 et qui ont été décrits plus haut (de façon plus précise, la figure 1 se réfère à un volant classique en matériau non-composite, tandis que les figures 2 à 5 se réfèrent aux volants en matériaux composites en particulier, la figure 2 concerne le volant "sans jante" et la figure 3 le volant "à anneaux concentriques", tandis que les figures 4 et 5 se rapportent à deux réalisations différentes récentes de volants répondant au critère visant à solliciter la plupart des fibres dans le sens longitudinal) - visent tous à obtenir un rapport tension/densité qui soit le plus élevé possible, parce que l'énergie spécifique, à savoir l'énergie qu'on peut théoriquement stocker par unité de masse d'un volant donné est proportionnelle à ce rapport. Or, pour cette énergie spécifique on tend à vouloir établir la valeur théorique de 400 Wh/kg.

Toutefois, dans la pratique on arrive à réaliser des volants pour lesquels l'énergie spécifique se situe normalement autour de 60 Wh/kg (on a signalé seulement un maximum de 120 Wh/kg), en sorte qu'on a été amené à remettre en cause le critère de conception d'un volant sur la base du principe visant à rendre maximum l'énergie spécifique susdite, parce que de cette manière (tel que le montrent les données ci-dessus) les matériaux composites ne sont pas utilisés au mieux de leurs performances.

Le volant, ou roue de stockage d'énergie, selon l'invention, est illustré à la figure 6.

La roue comprend une pluralité de segments périphériques massifs 2 juxtaposés l'un à côté de l'autre suivant le sens de la circonférence de la roue et réalisés en un matériau ayant une densité élevée et un faible coefficient de dilatation thermique. Des exemples non limitatifs de matériaux utilisables dans le cadre de l'invention sont constitués par de l'acier inoxydable, l'"INVAR", à savoir un alliage du fer au nickel, dont le coefficient de dilatation est négligeable, ou les céramiques.

4

Les segments 2 sont solidarisés de la manière suivante:
- à l'aide d'un premier enroulement continu A, qui pourvoit à solidariser un segment au suivant,
- à l'aide d'un deuxième enroulement continu B, qui relie les segments au moyeu 3 de la roue, et
- à l'aide d'un troisième enroulement continu C, qui solidarise lesdits segments 2 dans leur ensemble.

Ces trois enroulements A, B et C sont constitués de filaments qui, de préférence, sont en matériau composite et dont la densité est inférieure à celle des segments 2.

L'introduction, dans la composition d'une roue de stockage d'énergie, d'éléments (les segments 2) ayant une densité supérieure à celle du matériau dans lequel sont réalisés les enroulements de liaison A, B et C, répond à un critère très précis qui consiste à augmenter la masse d'un volant, et donc à diminuer son énergie spécifique, ce qui est manifestement en contraste avec le critère de conception des volants de l'Art antérieur.

Toutefois, s'il est vrai que la valeur maximale de l'énergie spécifique que l'on peut stocker diminue par rapport au cas où l'anneau périphérique 1 du volant est réalisé entièrement à partir d'enroulemtents en matériaux composites, il faut reconnaître que l'emploi de matériaux non-composites coopérant avec des matériaux composites pour la réalisation de l'anneau périphérique 1 permet d'obtenir une structure à laquelle correspond en pratique une énergie spécifique élevée qui dépasse facilement (comme le montrera l'étude de faisabilité qui est développée plus loin) ladite valeur maximale de 120 Wh/kg signalée dans l'Art antérieur et correspondant à l'emploi des seuls matériaux composites.

La raison de ce résultat - a priori non prévisible - réside dans le fait que les filaments des enroulements, notamment dudit troisième enroulement C, sont sollicités (étirés) au maximum de leurs performances sous l'action de la charge centrifuge (radiale) uniforme exercée par les segments 2, qui agissent comme un moyen de distribution de la charge radiale.

A cet effet, il est avantageux que l'épaisseur radiale des enroulements, notamment de l'enroulement C, soit relativement petite cette condition constitue une autre différence essentielle par rapport aux réalisations de l'Art antérieur et a pour résultat d'éliminer les effets d'une éventuelle délamination.

Dans le mode de réalisation préféré, illustré à la figure 6, le nombre préféré de segments est égal à neuf et, dans ces conditions, à chaque segment correspond un angle de 40°.

Il est avantageux que chaque segment présente en section un profil convexe et, de préférence, cylindrique à section ovale avec le petit axe de cette section ovale dirigé radialement. Cette disposition permet d'effectuer l'enroulement des différents filaments en maintenant ces derniers constamment sous tension et à éliminer tout glissement périphérique (ou tangentiel) lors de la mise en rotation du volant (cf. la figure 7).

L'épaisseur radiale maximum de chaque segment est de quelques millimètres.

En outre, l'enroulement A, qui est constitué d'un filament continu (notamment à base de fibre de carbone) dont l'épaisseur est de l'ordre du millimètre, s'applique, à chaque tour effectué dans le sens de la circonférence, alternativement sur la totalité du profil de la face externe 5 d'un segment et sur la totalité du profil de la face interne 6 du segment contigu qui le suit dans le sens de l'enroulement (cf. les figures 6 et 8).

On peut vérifier que la solidarisation du premier segment, par exemple représenté par le segment a, par rapport au deuxième segment, dénoté par b, a lieu seulement au début du deuxième tour, et que la solidarisation du dernier segment, dénoté par c, par rapport au premier segment a, a lieu seulement à la fin du deuxième tour, en sorte que la solidarisation complète des segments l'un par rapport à l'autre est obtenue en effectuant deux tours complets du filament de l'enroulement A dans la manière qui a été indiquée plus haut (dans la figure 6, une croix et deux traits parallèles dénotent le premier et le deuxième tours, respectivement).

Après l'enroulement A, on dispose l'enroulement B, lui aussi constitué d'un filament continu; ce dernier s'applique sur la face externe 5 uniquement desdits segments juxtaposés 2 et aussi tangentiellement sur le moyeu 3 de la roue, en passant d'un segment au suivant (cf. encore les figures 6 et 8).

La disposition tangentielle de l'enroulement B autour du moyeu élimine les efforts de compression dans ses filaments.

L'enroulement B est destiné à relier, à la façon des rayons d'une bicyclette, l'anneau périphérique 1 au moyeu 3 de la roue, sans qu'il soit toutefois sollicité par la charge constituée par cet anneau.

Cette condition est très importante parce que l'énergie spécifique maximum que l'on peut atteindre n'est pas limitée par la résistance intrinsèque des "rayons" B de la roue selon l'invention, contrairement à ce qui arrive dans les réalisations de l'Art antérieur, en particulier celles représentées aux figures 4 et 5:

Or, ce résultat est obtenu:
- en employant pour l'enroulement B un filament présentant un module d'élasticité inférieur, notamment à celui du filament dont se compose l'enroulement C, et
- en utilisant un nombre de spires réduit, à savoir en effectuant un nombre de tours inférieur autour de la circonférence de la roue.

L'enroulement B améliore la tenue de l'enroulement A, notamment par interaction avec ce dernier au niveau des points de croisement 4 (cf. la figure 8).

L'enroulement C est constitué par un filament continu qui est disposé sur la face externe 5 desdits segments juxtaposés 2 en parcourant plusieurs fois d'un bout à l'autre la circonférence de la roue, et ce après avoir disposé les enroulements A et B.

L'épaisseur radiale de l'enroulement C, bien que plus importante que celle des enroulements A et B, reste toutefois relativement faible de manière à charger uniformément ses filaments et éliminer - comme déjà dit plus haut les effets d'une éventuelle délamination.

Cet enroulement C est destiné à renforcer la roue vis-à-vis de son expansion, ainsi qu'à supporter sensiblement la quasi totalité de la charge (dans cet enroulement se manifestent la plupart des efforts dus aux forces centrifuges) à cet effet, il est avantageux d'employer des fibres présentant un rapport module d'élasticité/tension très élevé. L'enroulement C continue à jouer son rôle de support de la charge même dans le cas où les enroulements A et C présentent le même module, parce que l'enroulement C présente, à cause des modalités d'enroulement, une longueur moindre que celle présentée par l'enroulement A.

Toutefois, il est avantageux que le module d'élasticité de l'enroulement C soit supérieur à celui de l'enroument B, pour éviter les contraintes radiales au niveau de l'anneau périphérique 1.

Après avoir vu le caractère décisif constitué par le choix d'un petit nombre de tours, ou de spires (conjointement à un faible module) pour que l'enroulement B puisse jouer essentiellement le rôle de moyen de liaison de l'anneau périphérique 1 au moyeu 3 de la roue sans devoir supporter aucune charge sensible, il est opportun de préciser que, une fois fixé le nombre de tours ou de spires, à savoir l'épaisseur radiale, de l'enroulement C, le nombre de spires des enroulements A et B dépend des contraintes structurales, par exemple de la nécessité de ne pas induire dans ces enroulements un effort radial excessivement élevé et des tensions radiales et tangentielles équilibrées.

La conception hybride du volant conforme à la présente invention a comme avantage non négligeable une réduction sensible des dimensions des volants construits suivant les dispositions qui précèdent par rapport aux volants de l'Art antérieur. Pour donner une idée de cette réduction de dimensions, il suffit d'indiquer à titre d'exemple non limitatif, qu'on peut passer facilement d'un volant de diamètre égal à 50 cm à un volant dont le diamètre est seulement de 20 cm, tout en pouvant stocker la même quantité d'énergie, ce qui signifie qu'avec le même diamètre on peut stocker une quantité d'énergie plus importante.

Il faut souligner que le mode de réalisation représenté à la figure 6 et décrit plus haut ne veut en rien limiter la portée de l'invention, dans ce sens que, en particulier, on peut utiliser des matériaux différents de ceux proposés à titre indicatif, non seulement pour les segments périphériques massifs de la roue de stockage d'énergie, mais également pour les enroulements, ces derniers pouvant être constitués (même si cela ne présente pas un très grand intérêt en pratique) aussi de filaments en un matériau non-composite (comme les segments).

En outre, bien qu'on préfère utiliser un nombre de segments impair, cette condition n'est pas limitative non plus.

Soulignons aussi que, de préférence, le rapport entre la densité desdits segments périphériques de la roue de stockage d'énergie selon l'invention et la densité desdits enroulements A, B et C est compris entre 8 et 12.

## Etude de faisabilité

A la base de cette étude il y a les hypothèses suivantes:

- lorsque le volant est entraîné en rotation à la vitesse angulaire nominale $\omega$, la force centrifuge se manifeste comme une pression radiale uniform p,
- cette charge radiale est supportée essentiellement par la portion externe des enroulements, à savoir par la portion en matériau composite de la roue qui enveloppe les segments en matériau non-composite, étant donné que les contraintes qui se manifestent dans les "rayons" de la roue sont beaucoup plus petites que celles se manifestant dans ladite portion externe en matériau composite.

Or, la charge radiale susdite induit dans un élément donné de la portion externe résistante, notamment en matériau composite, de la roue une tension T qui est dirigée tangentiellement et qui, pour des raisons évidentes de symétrie, a la même intensité de part et d'autre dudit élément.

Pour l'équilibre dynamique de cet élément (cf. la figure 9), il faut que soit satisfaite la relation suivante:

$$2T \cdot \sin\alpha = p \cdot 2\alpha r \cdot L$$

où L est la largeur axiale de la roue de stockage d'énergie.
- Pour $\alpha$ petit, on peut admettre que $\sin\alpha \cong \alpha$, ce qui implique que:

$$2T \cdot \alpha \cong p \cdot 2\alpha r \cdot L$$

et donc que:

$$T \cong p \cdot r \cdot L$$

Or, la pression radiale p correspond à la force: centrifuge

$$f = \Delta m \cdot \omega^2 r = p \cdot \Delta S = p \cdot 2\alpha r \cdot L,$$

où $\Delta S$ est la surface de l'élément résistant, tandis que:

$$\Delta m = \Delta m_c + \Delta m_{nc},$$

à savoir que $\Delta m$ est la somme de la masse $\Delta m_c$ de l'élément résistant en matériau composite et de la masse $\Delta m_{nc}$ de la portion en matériau non-composite constituée par les segments de la roue, de densités $\rho_c$ et $\rho_{nc}$ respectivement. Donc:

$$\Delta m_c = \rho_c \cdot \Delta S \cdot t_c$$
$$\Delta m_{nc} = \rho_{nc} \cdot \Delta S \cdot t_{nc},$$

$t_c$ et $t_{nc}$ étant les épaisseurs des portions en matériau composite et non-composite, respectivement (cf. aussi les figures 10a et 10b).

Cela implique que:

$$f = (\rho_n \cdot \Delta S \cdot t_c + \rho_{nc} \cdot \Delta S \cdot t_{nc}) \cdot \omega^2 r,$$

à savoir que:

$$\tfrac{f}{\Delta S} = \tfrac{f}{2\pi r L} = p = (\rho_c \cdot t_c + \rho_{nc} \cdot t_{nc}) \cdot \omega^2 r = p_c + p_{nc},$$

$p_c$ et $p_{nc}$ traduisant, en pression équivalente, les forces centrifuges correspondant respectivement aux portions périphériques en matériau composite et non-composite de la roue de stockage d'énergie, à savoir:

$$p_c = \rho_c \cdot t_c \cdot \omega^2 r$$
$$p_{nc} = \rho_{nc} \cdot t_{nc} \cdot \omega^2 r.$$

La tension $\sigma'_c$ enduite par unité de section transversale de la portion en matière composite est donné par:

$$\sigma'_c = \tfrac{T}{t_c \cdot L}$$

qui, par unité de largeur axiale de la roue est égale à $\tfrac{T}{t_c}$, à savoir à:

$$\sigma_c = \tfrac{T}{t_c} = \tfrac{p \cdot r}{t_c} = \tfrac{(p_c + p_{nc}) \cdot r}{t_c}.$$

En admettant maintenant que les différentes grandeurs indiquées plus haut aient, par exemple, les valeurs suivantes:

- $\omega = 30000$ tours/minut $\tfrac{30000 \cdot 2\pi}{60} = 1000\,\pi$ rad/s

- $r = 25$ cm $= 25 \cdot 10^{-2}$ m

(on admet, pour des raisons de simplicité, que le rayon r soit le même pour toutes les portions, composite et non-composite, de l'anneau périphérique)

- $L = 6$ cm $= 6 \cdot 10^{-2}$ m
- $\rho_c = 1{,}5 \cdot 10^3$ Kg/m$^3$
- $\rho_{nc} = 8 \cdot 10^3$ Kg/m$^3$
- $t_{nc} = 1$ cm $10^{-2}$ m,

il est intéressant de calculer la valeur de la tention $\sigma_c$ susdite pour différentes valeurs de l'épaisseur $t_c$ de la portion résistante en matériau composite, notamment:
- pour $t_c = 1$ cm $= 10^{-2}$ m =, on a

$$\sigma_c = \tfrac{\rho_c \cdot t_c \cdot \omega^2 \cdot r + \rho_{nc} \cdot \omega^2 \cdot r}{t_c} \cdot r =$$

$$= \tfrac{1{,}5 \cdot 10^3 \cdot 10^{-2} \cdot (1000\pi)^2 \cdot 25 \cdot 10^{-2} + 8 \cdot 10^3 \cdot 10^{-2} \cdot (1000\pi)^2 \cdot 25 \cdot 10^{-2}}{10^{-2}} \cdot 25 \cdot 10^{-2} =$$

$$= (\tfrac{3}{8} \cdot \pi^2 \cdot 10^7 + 2 \cdot \pi^2 \cdot 10^7) \cdot 25 =$$

$$= \tfrac{19}{8} \cdot \pi^2 \cdot 10^7 \cdot 25 \cong 5{,}86 \cdot 10^9 \text{ N/m}^2$$

- pour $t_c = 2$ cm $= 2 \cdot 10^{-2}$ m, on a:

$$\sigma_c = (\tfrac{6}{8} \cdot \pi^2 \cdot 10^7 + 2 \cdot \pi^2 \cdot 10^7) \tfrac{25}{2} =$$

$$= \tfrac{22}{8} \cdot \pi^2 \cdot 10^7 \cdot \tfrac{25}{2} \cong 3{,}39 \cdot 10^9 \text{ N/m}^2$$

- tandis que pour $t_c = 3cm = 3 \cdot 10^{-2}$ m, on a:

$$\sigma_c = (\tfrac{9}{8} \cdot \pi^2 \cdot 10^7 + 2 \cdot \pi^2 \cdot 10^7) \cdot \tfrac{25}{3} =$$

$$= \tfrac{25}{8} \cdot \pi^2 \cdot 10^7 \tfrac{25}{3} \cong 2{,}57 \cdot 10^9 \text{ N/m}^2.$$

Il va de soi qu'on peut réduire ultérieurement $\sigma_c$ (et donc l'expression radiale, voir ce qui suit) en augmentant la valeur de $t_c$, par exemple à 4 cm $= 4 \cdot 10^{-2}$ m. Toutefois, on considère que la dernière valeur de $\sigma_c = 2{,}57 \cdot 10^9$ N/m$^2$ assure une marge de sécurité suffisante par rapport à des matériaux composites, notamment à base de fibres de carbone, dont la tension limite $\sigma_{c, max} = 4 \cdot 10^9$ N/m$^2$ (dans ce cas $\sigma_c \cong 64{,}25\%$ de $\sigma_{c, max}$).

Dans ce qui suit, on compare la force centrifuge (radiale) $R_{cr}$ agissant sur la portion périphérique en matériau composite de la roue avec la force radiale $R_{cs}$ qui agit sur les "rayons" de cette roue, le calcul de $R_{cr}$ et $R_{cs}$ étant référé à l'unité de largeur axiale L de la roue de stockage d'énergie selon l'invention.

Le calcul de $R_{cr}$ est immédiat, en considérant que la pression radiale $p = p_c + p_{nc}$ susdite agit sur la surface $2\pi r \cdot L$, à savoir $2\pi r$ si l'on se réfère encore à l'unité de largeur axiale L. Donc (pour $t_c = 3 \cdot 10^{-2}$ m):

$$R_{cr} = 2\pi r \cdot p = 2\pi \cdot 25 \cdot 10^{-2} \cdot \tfrac{25}{8} \cdot \pi^2 \cdot 10^7 \text{ N/m} - \cong 48{,}4 \cdot 10^7 \text{ N/m}.$$

Le calcul $R_{cs}$ est indiqué ci-après.

Le module de Young $E_{cr}$ de la portion périphérique de la roue, réalisée en fibres de carbone, est donné par:

$$E_{cr} = \tfrac{1}{\Delta 1} \cdot \sigma_c = 3 \cdot 10^{11} \text{ N/m}^2$$

où 1 est la longueur de la portion périphérique, à savoir $1 = 2\pi r$, tandis que $\Delta 1$ est la variation de longueur due à la dilatation des fibres sous l'action de la force centrifuge.

Donc, on peut écrire que (avec les données indiquées plus haut):

$$\Delta 1 = \tfrac{1}{E_{cr}} \cdot \sigma_c \, \tfrac{2\pi r \cdot \sigma_c}{E_{cr}} =$$

$$= \tfrac{2\pi \cdot 25 \cdot 10^{-2} \cdot 2{,}57 \cdot 10^9}{3 \cdot 10^{11}} \text{ m} \cong 1{,}34 \cdot 10^{-2} \text{ m}.$$

Si on indique avec $\Delta r$ la variation du rayon r de la roue suite à la dilatation susdite, on peut également écrire pour $\Delta 1$ ce qui suit:

$$\Delta 1 = 2\pi \cdot (r + \Delta r) - 2\pi r \cong 1{,}34 \cdot 10^{-2} \text{ m},$$

ce qui permet de calculer $\Delta r$, qui vaut:

$$\Delta r \cong \tfrac{1{,}34 \cdot 10^{-2}}{2\pi} \text{ m}$$

et, donc, le rapport $\tfrac{r}{\Delta r}$ (ou $\tfrac{\Delta r}{r}$), qui est lié au module de Young $E_{cs}$ des "rayons" de la roue (avec 9 segments périphériques, on a 9 de ces "rayons"). On admet que $E_{cs} = 1{,}5 \cdot 10^{11}$ N/m$^2$.

Sur la base de ce qui précède, on peut écrire donc:

$$E_{cs} = \tfrac{r}{\Delta r} \cdot \sigma_s,$$

d'ou:

$$\sigma_s = E_{cs} \cdot \tfrac{\Delta r}{r} = 1{,}5 \cdot 10^{11} \cdot \tfrac{1{,}34 \cdot 10^{-2}}{2\pi \cdot 25 \cdot 10^{-2}} \text{ N/m}_2 \cong \tfrac{4}{\pi} \cdot 10^9 \text{ N/m}^2.$$

Si $t_s$ est l'épaisseur des "rayons" de la roue de stockage d'énergie, $t_s \cdot L$ est la section résistante de chaque "rayon", donc $9 \cdot t_s \cdot L$ est la section résistante de la totalité des "rayons" de la roue, en sorte que, en nous référant toujours à l'unité de largeur axiale L, la force radiale $R_{cs}$ qui agit sur les 9 "rayons" est donnée, en admettant que:

$$t_s = 1 \text{ mm} = 10^{-3} \text{ m, par:}$$

$$R_{cs} = 9 \cdot \sigma_s \cdot t_s = 9 \cdot \tfrac{4}{\pi} \cdot 10^9 \cdot 10^{-3} \cong 1{,}15 \cdot 10^7 \text{ N/m}.$$

Etant donné que:

$$\tfrac{R_{cr}}{R_{cs}} = 42,$$

donc que $R_{cr} > > R_{cs}$, on déduit - comme on l'avait anticipé que les "rayons" de la roue selon l'invention ne contribuent pas de façon appréciable à la rigidité radiale.

Au demeurant, il y a lieu d'observer que la variation relative du rayon r de la roue ne pose pas de problèmes particuliers étant donné qu'elle est très faible; en fait, avec les données indiquées plus haut, on a:

$$\frac{\Delta r}{r} = \frac{1,34 \cdot 10^{-2}}{2\pi \cdot 25 \cdot 10^{-2}} \cong 0,85 \cdot 10^{-2}.$$

Il est facile de vérifier que, dans le cas où $E_{cr} = 2 \cdot 10^{11}$ N/m$^2$, $R_{cs} \cong 1,74 \cdot 10^7$ N/m et que, donc, également dans ce cas les "rayons" de la roue de stockage d'énergie selon l'invention ne limitent pas les performances de la portion résistante périphérique en matériau composite de la roue.

Dans ce qui suit, on calcule l'énergie cinétique $\bigsqcup$ stockée, à la vitesse angulaire $\omega = 30000$ tours/minute, dans une roue dont la largeur L = 6 cm = $6 \cdot 10^{-2}$ m, ainsi que l'énergie cinétique maximum $\bigsqcup_{max}$ correspondant à la vitesse angulaire maximum $\omega_{max}$.

On peut écrire que:

$$\bigsqcup = \tfrac{1}{2} m v_2 = \tfrac{1}{2} m \omega^2 r^2,$$

où la masse m est obtenue en ajoutant aux contributions par unité de largeur axiale L, $\Delta m_c$ et $\Delta m_{nc}$, calculées pour $\alpha = \pi$ (qui ont été indiquées plus haut et qui sont dues aux portions périphériques en matériau composite et non-composite de la roue), la contribution (également référée à l'unité de largeur) due aux 9 "rayons" de cette roue, à savoir la quantité:

$$\Delta m_s = 2\alpha r \cdot \rho_c \cdot 2\pi r \cdot 9 \cdot t_s.$$

Pour $\alpha = \pi$, on a par unité de largeur axiale L:

$$\frac{m}{L} = (\Delta m_c)_{\alpha = \pi} + (\Delta m_{nc})_{\alpha = \pi} + (\Delta m_s)_{\alpha = \pi} =$$

$$= 2\pi r \cdot (\rho_c \cdot t_c + \rho_{nc} \cdot t_{nc} + \rho_c \cdot t_s) =$$

$$= 2\pi r \cdot (3 \cdot 10^{-2} \cdot 1,5 \cdot 10^3 + 10^{-2} \cdot 8 \cdot 10^3 + 0,9 \cdot 10^{-2} \cdot 1,5 \cdot 10^3) =$$

$$= 2\pi r \cdot (3,9 \cdot 1,5 \cdot 10 + 80) =$$

$$= 2\pi \cdot 25 \cdot 10^{-2} \cdot 138,5 = 217,5 \text{ Kg/m},$$

donc, pour L = 6 cm = $6 \cdot 10^{-2}$ m, on obtient:

$$m = 217,5 \cdot 6 \cdot 10^{-2} \text{ Kg} \cong 13 \text{ Kg}.$$

Il s'en suit que:

$$\bigsqcup = \tfrac{1}{2} m \omega^2 r^2 = \tfrac{1}{2} \cdot 13 \cdot (1000\pi)^2 \, 25^2 \cdot 10^{-4} \text{ Ws} =$$

$$= \tfrac{1}{2} \cdot 13 \cdot \frac{1000^2 \cdot \pi^2 \cdot 25^2 \cdot 10^{-4}}{60 \cdot 60} \text{ Wh} =$$

$$= \tfrac{1}{2} \cdot 13 \cdot \frac{25 \cdot 25}{6 \cdot 6} \cdot \pi^2 \text{ Wh} \cong$$

$$\cong \tfrac{1}{2} \cdot 13 \cdot 171 \text{ Wh} \cong 1,1 \text{ kWh}.$$

En ce qui concerne le calcul de $\bigsqcup_{max}$, il suffit d'imposer que $\sigma_c = \sigma_{cmax} = 4 \cdot 10^9$ N/m$^2$ dans la relation

$$\sigma_c = \frac{T}{t_c},$$

à savoir, en nous référant toujours à l'unité de largeur axiale L de la roue, on impose que:

$$T_{max} = p_{max} \cdot r = \sigma_{c, max} \cdot t_c.$$

Donc, on peut écrire que:

$$(\rho_{nc} \cdot t_{nc} + \rho_c \cdot t_c) \cdot \omega^2_{max} \cdot r^2 = 4 \cdot 10^9 \cdot t_c,$$

ce qui permet de calculer $\omega^2_{max}$:

$$\omega^2_{max} = \frac{4 \cdot 10^9 \cdot t_c}{(\rho_{nc} \cdot t_{nc} + \rho_c \cdot t_c) \cdot r^2} =$$

$$= \frac{4 \cdot 10^9 \cdot t_c}{(8 \cdot 10^3 \cdot 10^{-2} + 1,5 \cdot 10^3 \cdot 3 \cdot 10^{-2}) \cdot 25^2 \cdot 10^{-4}} =$$

$$= \frac{12}{12,5 \cdot 25^2} \cdot 10^6 = 15,36 \cdot 10^6, \ rad^2/s^2,$$

ce qui donne:

$$\omega_{max} = 37425 \ rad/s$$

et:

$$L_{max} = \frac{1}{2} \cdot \frac{13 \cdot 15,36 \cdot 10^6 \cdot 25^2 \cdot 10^{-4}}{60 \cdot 60} \ Wh =$$

$$= \frac{1}{2} \cdot 13 \cdot \frac{25 \cdot 25}{6 \cdot 6} \cdot 15,36 \ Wh \cong \frac{1}{2} \cdot 13 \cdot 266 \ Wh =$$

$$\cong 1,7 \ kWh,$$

ce qui permet de calculer aisément l'énergie stockée par unité de masse de la roue selon l'invention, réalisée sur la base des données indiquées plus haut à titre d'exemple non limitatif, à savoir l'énergie spécifique maximum $u_{s,max}$ correspondant à la tension limite $\sigma_{c,max} = 4 \cdot 10^9 \ N/m^2$:

$$u_{s, \, max} = \frac{L_{max}}{m} \cong 133 \ Wh/Kg,$$

valeur qui est supérieure à la valeur maximum théorique de 120 Wh/Kg qui a été signalée dans l'Art antérieur.

En admettant qu'on sollicite la portion en matériau composite de l'anneau périphérique de la roue selon l'invention à 64,25 % de sa tension limite $\sigma_{c, \, max}$, à savoir qu'on ne dépasse pas la valeur $\sigma_c = 2,57 \cdot 10^9 \ N/m^2$, on obtient en définitive, dans l'exemple auquel on fait référence, une énergie spécifique $u_s$ qui est donnée par:

$$u_s = 64,25 \% \cdot u_{s, \, max} \cong 86 \ Wh/Kg,$$

valeur qui est elle aussi supérieure à la valeur de 60 Wh/Kg qui a été obtenue antérieurement, toujours avec des volants réalisés complètement en matériaux composites.

Ainsi que cela ressort de ce qui précède, l'invention ne se limite nullement à ceux de ses modes de réalisation et d'application qui viennent d'être décrits de façon plus explicite; elle en embrasse au contraire toutes les variantes qui peuvent venir à l'esprit du technicien en la matière, sans s'écarter du cadre, ni de la portée, de la présente invention.

## Revendications

1. Roue de stockage d'énergie, comprenant une pluralité de segments périphériques massifs (2) se suivant dans le sens de la circonférence de la roue et réalisés en un matériau ayant une densité élevée et un faible coefficient de dilatation thermique,

- lesdits segments (2) étant solidarisés entre eux et au moyeu de la roue (1) à l'aide d'un premier (A), d'un deuxième (B) et d'un troisième (C) enroulement continu constitués chacun de filaments en matériaux composites, dont la densité est inférieure à celle du matériau dans lequel sont réalisés les segments (2) de roue (1),

- ledit deuxième enroulement (B) étant constitué par un enroulement continu dont le filament s'applique sur la face externe (5) uniquement desdits segments périphériques (2) ainsi que sur le moyeu (3) de la roue (1), tangentiellement à celui-ci, en passant d'un segment au suivant,

- ledit troisième enroulement (C) étant constitué par un enroulement continu dont le filament est disposé sur la face externe (5) desdits segments périphériques (2) en parcourant d'un bout à l'autre la circonférence de la roue (1), et ce après avoir disposé lesdits premier et deuxième enroulements (A, B) ,

laquelle roue de stockage d'énergie est caractérisée en ce que:

- lesdits segments périphériques (2) sont juxtaposés l'un côté de l'autre,

- ledit premier enroulement (A) solidarise les différents segments (2) l'un par rapport au suivant et est constitué par un enroulement continu dont le filament s'applique, chaque tour effectué dans le sens de la circonférence, alternativement sur la totalité du profil de la face externe (5) d'un segment et sur la totalité du profil de la face interne (6) du segment contigu qui le suit dans le sens de l'enroulement, la solidarisation du premier segment (a) par rapport au deuxième (b) ayant lieu au début du deuxième tour, tandis que la solidarisation du dernier segment (c) par rapport au premier (a) a lieu à la fin du deuxième tour.

2. Roue selon la revendication 1, caractérisée en ce que l'épaisseur radiale ($t_{nc}$) desdits segments (2) est du même ordre de grandeur ou inférieure par rapport a l'épaisseur radiale ($t_c$) desdits enroulements.

3. Roue selon l'une quelconque des revendications 1 ou 2, caractérisée en ce que l'épaisseur radiale dudit troisième enroulement (C) est relativement importante par rapport à l'épaisseur radiale desdits premier et deuxième enroulements (A, B).

4. Roue selon l'une quelconque des revendications 1, 2 ou 3, caractérisée en ce que ledit deuxième enroulement (B) comporte un nombre de spires (ou de tours) moindre par rapport au nombre de spires des autres enroulements (A, C).

5. Roue selon l'une quelconque des revendications 1 à 4, caractérisée en ce que ledit troisième enroulement (C) présente un module d'élasticité égal ou supérieur à celui dudit premier enroulement (A), et ledit deuxième enroulement (B) présente un module d'élasticité moindre par rapport à celui desdits premier et troisième enroulements (A, C).

6. Roue selon l'une quelconque des revendications 1 à 5, caractérisée en ce que les épaisseurs radiales des enroulements (A, B, C) et des segments (2) sont minces.

7. Roue selon l'une quelconque des revendications 1 à 6, caractérisée en ce que les segments juxtaposes (2) sont en nombre impair.

8. Roue selon la revendication 7, caractérisée en ce que le nombre de segments (2) juxtaposés est égal à 9.

9. Roue selon l'une quelconque des revendications 1 à 8, caractérisée en ce que le rapport entre la densité desdits segments périphériques (2) de la roue et la densité desdits enroulements (A, B, C) est compris entre 8 et 12.

10. Roue selon l'une quelconque des revendications 1 à 9, caractérisée en ce que chaque segment (2) présente une section dont le profil est convexe.

11. Roue selon la revendication 10, caractérisée en ce que chaque segment (2) est cylindrique à section ovale.

12. Roue selon la revendication 11, caractérisée en ce que chaque segment (2) est disposé avec le petit axe de la section ovale dirigé radialement.

## Patentansprüche

1. Energiespeicherndes Rad mit einer Vielzahl von massiven Umfangssegmenten (2), die in der Richtung des Umfanges des Rades aufeinanderfolgen und aus einem Werkstoff hergestellt sind, der eine hohe Dichte und einen geringen Wärmeausdehnungskoeffizient aufweist,
wobei die Segmente (2) untereinander und mit der Nabe des Rades (1) mit Hilfe einer ersten (A), einer zweiten (B) und einer dritten (C) ununterbrochenen Umwicklung miteinander verbunden sind, die jeweils aus Endlosfäden aus Verbund-Werkstoffen bestehen, deren Dichte kleiner als die des Werkstoffes ist, aus dem die Segmente (2) des Rades (1) hergestellt sind,
wobei die besagte zweite Umwicklung (B) aus einer ununterbrochenen Umwicklung besteht, deren Endlosfaden sich nur auf der äußeren Seite (5) der besagten Umfangssegmente (2), sowie beim Übergang von einem Segment auf das nächste tangential auf die Nabe (3) des Rades (1) dicht anlegt,
wobei die besagte dritte Umwicklung (C) aus einer ununterbrochenen Umwicklung besteht, deren Endlosfaden auf der äußeren Seite (5) der besagten Umfangssegmente (2) aufgebracht wird, indem er den Umfang des Rades (1) von einem Ende zum anderen durchläuft, und zwar nachdem die besagten ersten und zweiten Umwicklungen (A, B) aufgebracht worden sind,
wobei das energiespeichernde Rad dadurch gekennzeichnet ist,
- daß die besagten Umfangssegmente (2) jeweils nebeneinanderliegend angeordnet sind,
- daß die besagte erste Umwicklung (A) die verschiedenen Segmente (2) jeweils mit dem nächstfolgenden verbindet und aus einer ununterbrochenen Umwicklung besteht, deren Endlosfaden sich bei jedem in der Richtung des Umfanges realisierten Umgang wechselweise auf die Gesamtheit der Kontur der äußeren Seite (5) eines Segmentes und auf die Gesamtheit der Kontur der inneren Seite (6) des angrenzenden Segmentes, das ihm in Umwicklungsrichtung nachfolgt, dicht anlegt, wobei die Verbindung des ersten Segmentes (a) mit dem zweiten (b) zu Beginn des zweiten Umganges stattfindet, wohingegen die Verbindung des letzten Segmentes (c) mit dem ersten (a) am Ende des zweiten Umganges stattfindet.

2. Rad nach Anspruch 1, dadurch gekennzeichnet, daß die radiale Dicke ($t_{nc}$) der Segmente (2) dieselbe oder eine kleinere Größenordnung im Verhältnis zu der radialen Dicke ($t_c$) der besagten Umwicklungen aufweist.

3. Rad nach einem der Ansprüche 1 oder 2, dadurch gekennzeichnet, daß die radiale Dicke der dritten Umwicklung (C) ziemlich groß im Verhältnis zu der radialen Dicke der ersten und zweiten Umwicklungen (A, B) ist.

4. Rad nach einem der Ansprüche 1, 2 oder 3, dadurch gekennzeichnet, daß die zweite Umwicklung (B) eine kleinere Anzahl von Windungen (oder von Umgängen) im Verhältnis zu der Anzahl der Windungen der anderen Umwicklungen (A, C) aufweist.

5. Rad nach einem der Ansprüche 1 bis 4, dadurch gekennzeichnet, daß die besagte dritte Umwicklung (C) einen Elastizitätsmodul aufweist, der gleich oder größer als der der ersten Umwicklung (A) ist, und daß die besagte zweite Umwicklung (B) einen kleineren Elastizitätsmodul im Verhältnis zu denen der ersten und dritten Umwicklungen (A, C) aufweist.

6. Rad nach einem der Ansprüche 1 bis 5, dadurch gekennzeichnet, daß die radialen Dicken der Umwicklungen (A, B, C) und der Segmente (2) klein sind.

7. Rad nach einem der Ansprüche 1 bis 6, dadurch gekennzeichnet, daß die nebeneinanderliegenden Segmente (2) in ungerader Anzahl vorgesehen sind.

11

8. Rad nach Anspruch 7, dadurch gekennzeichnet, daß die Anzahl von nebeneinanderliegenden Segmenten (2) neun ist.

9. Rad nach einem der Ansprüche 1 bis 8, dadurch gekennzeichnet, daß das Verhältnis zwischen der Dichte der Umfangssegmente (2) des Rades und der Dichte der besagten Umwicklungen (A, B, C) zwischen acht und zwölf liegt.

10. Rad nach einem der Ansprüche 1 bis 9, dadurch gekennzeichnet, daß jedes Segment (2) einen Querschnitt aufweist, dessen Querschnittsprofil konvex ist.

11. Rad nach Anspruch 10, dadurch gekennzeichnet, daß jedes Segment (2) zylindrisch mit einem ovalen Querschnitt ausgebildet ist.

12. Rad nach Anspruch 11, dadurch gekennzeichnet, daß jedes Segment (2) so angeordnet ist, daß die kleine Achse des ovalen Querschnittes radial ausgerichtet ist.

## Claims

1. Energy storage wheel, comprising a plurality of solid peripheral segments (2) following each other in the direction of the circumference of the wheel and made from a material having a high density and a low coefficient of thermal expansion,

the said segments (2) being integrated with each other and to the hub of the wheel (1) by means of a first (A), a second (B) and a third (C) continuous winding each composed of filaments of composite materials, the density of which is less than that of the material from which the segments (2) of the wheel (1) are made,

the said second winding (B) composed of a continuous winding, the filament of which is applied to the external face (5) solely of the said peripheral segments (2), and also to the hub (3) of the wheel (1), tangentially thereto, passing from one segment to the next, the said third winding (C) composed of a continuous winding, the filament of which is applied to the external face (5) of the said peripheral segments (2), running from one end to the other over the circumference of the wheel (1), after having applied the said first and second windings (A, B),

which energy storage wheel is characterized in that:

- the said peripheral segments (2) are juxtaposed one beside the other,
- the said first winding (A) integrates the different segments (2) one in relation to the next and is composed of

a continuous winding, the filament of which is applied, at each turn carried out in the direction of the circumference, alternately onto the whole of the profile of the external face (5) of one segment and onto the whole of the profile of the internal face (6) of the contiguous segment which follows it in the direction of the winding, the integration of the first segment (a) in relation to the second (b) taking place at the beginning of the second turn, whereas the integration of the last segment (c) in relation to the first (a) takes place at the end of the second turn.

2. Wheel according to claim 1, characterized in that the radial thickness ($t_{nc}$) of the said segments (2) is of the same order of magnitude or less in relation to the radial thickness ($t_c$) of the said windings.

3. Wheel according to any one of claims 1 or 2, characterized in that the radial thickness of the said third winding (C) is relatively large in relation to the radial thickness of the said first and second windings (A, B).

4. Wheel according to any one of claims 1, 2 or 3, characterized in that the said second winding (B) comprises a number of turns which is less in relation to the number of turns of the other windings (A, C).

5. Wheel according to any one of claims 1 to 4, characterized in that the said third winding (C) has a modulus of elasticity which is equal to or greater than that of the said first winding (A), and the said second winding (B) has a modulus of elasticity which is less in relation to that of the said first and third windings (A, C).

6. Wheel according to any one of claims 1 to 5, characterized in that the radial thicknesses of the windings (A, B, C) and of the segments (2) are small.

7. Wheel according to any one of claims 1 to 6, characterized in that the juxtaposed segments (2) are of an uneven number.

8. Wheel according to claim 7, characterized in that the number of juxtaposed segments (2) is equal to 9.

9. Wheel according to any one of claims 1 to 8, characterized in that the ratio between the density of the said peripheral segments (2) of the wheel and the density of the said windings (A, B, C) is comprised between 8 and 12.

10. Wheel according to any one of claims 1 to 9, characterized in that each segment (2) has a section, the profile of which is convex.

11. Wheel according to claim 10, characterized in that each segment (2) is cylindrical with an oval section.

12. Wheel according to claim 11, characterized in that each segment (2) is arranged with the small axis of the oval section directed radially.

## FIG. 1

## FIG. 2

## FIG. 3

## FIG. 4

## FIG. 5

FIG.9

FIG.10a

FIG.10b

FIG.6

FIG.8

FIG.7